(19) Europäisches Patentamt / European Patent Office / Office européen des brevets

(11) **EP 2 757 352 B1**

(12) **FASCICULE DE BREVET EUROPEEN**

(45) Date de publication et mention
de la délivrance du brevet:
**18.11.2015 Bulletin 2015/47**

(51) Int Cl.:
**G01D 5/24** *(2006.01)* **G01N 27/22** *(2006.01)*
**G01D 5/243** *(2006.01)*

(21) Numéro de dépôt: **13151668.4**

(22) Date de dépôt: **17.01.2013**

(54) **Système de contrôle et méthode de gestion de capteur**

Sensorüberwachungssystem und -verwaltungsmethode

Control system and management method of a sensor

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(43) Date de publication de la demande:
**23.07.2014 Bulletin 2014/30**

(73) Titulaire: **EM Microelectronic-Marin SA
2074 Marin (CH)**

(72) Inventeur: **Novac, Pinchas
2000 Neuchâtel (CH)**

(74) Mandataire: **Ravenel, Thierry Gérard Louis et al
ICB
Ingénieurs Conseils en Brevets SA
Faubourg de l'Hôpital 3
2001 Neuchâtel (CH)**

(56) Documents cités:
**JP-A- S58 182 502      US-A- 5 123 035
US-A1- 2011 316 558**

**Description**

La présente invention concerne un circuit de mesure comprenant un bloc de contrôle pour contrôler ledit circuit, une base de temps pour fournir un signal d'horloge pour cadencer ledit circuit, un bloc capteur agencé pour fournir signal de sortie, ledit circuit de mesure comprenant en outre un premier bloc compteur cadencé à la fréquence d'horloge et un second bloc compteur cadencé par la fréquence du signal de sortie du bloc capteur.

ARRIERE PLAN TECHNOLOGIQUE

Les capteurs d'humidité sont constitués de deux armatures munies chacune d'une pluralité de bras. Les deux armatures sont agencées pour être imbriquées l'une dans l'autre et présentent un diélectrique entre elles. Ces armatures sont alimentées en tension de sorte que leur imbrication entraîne la création d'une capacité.
Ce capteur d'humidité fonctionne de sorte que lorsque le taux d'humidité dans l'air augmente, des molécules d'eau s'infiltrent entre les deux armatures dans le diélectrique. Cette infiltration d'eau entraîne une modification de la capacité ce qui permet de quantifier le taux d'humidité lors d'une mesure en appliquant une tension. Le capteur d'humidité peut être une structure connectée à un circuit intégré ou être directement compris dans le circuit intégré.
Pour déterminer une valeur d'humidité à partir de cette capacité, il est connu plusieurs méthodes.
Une première méthode consiste à connecter en sortie du capteur d'humidité, un amplificateur de charge pour obtenir un signal de tension représentatif du taux d'humidité. Ce signal est envoyé dans un conditionneur de signal préparant le signal pour être envoyé dans un convertisseur analogique numérique de sorte à fournir une valeur numérique N. Cette valeur numérique N est ensuite envoyée dans un circuit qui le linéarise car la courbe de la capacité en fonction du taux d'humidité n'est pas linéaire. On obtient alors une valeur numérique N qui est fonction de la capacité C du capteur.
Une seconde méthode consiste à connecter en sortie du capteur d'humidité, un circuit pour obtenir un signal de fréquence représentatif du taux d'humidité. En effet, cette capacité variable est inséré dans un résonateur de sorte à réaliser un oscillateur RC. Par conséquent, la fréquence sortant dudit résonateur est dépendante de la valeur de la capacité et donc du taux d'humidité. Cette fréquence est envoyée dans un conditionneur de signal préparant le signal pour être envoyé dans un convertisseur analogique numérique de sorte à fournir un nombre N numérique. Ce conditionneur de signal peut être un démodulateur de fréquence numérique ou un ensemble formé d'un circuit permettant de convertir ce signal de fréquence en tension puis de la convertir en une valeur numérique N qui sera traiter pour obtenir la valeur de la grandeur physique.
Un inconvénient de ces deux méthodes est qu'elles nécessitent un circuit qui comprend un grand nombre de composant c'est-à-dire un circuit dont le coût de fabrication est élevé mais aussi qui nécessite une surface de silicium plus importante lors de l'intégration dans un circuit intégré. De ce fait, le nombre de circuits de mesure par plaquette est moins important.
Le document JP S58 182502 A décrit un circuit de mesure selon l'état de la technique.

RESUME DE L'INVENTION

L'invention a pour but de pallier les inconvénients de l'art antérieur en proposant de fournir un circuit de mesure qui est précis quelques soit les composants utilisés et qui est peu coûteux particulièrement lors de l'implémentation dans un circuit intégré.
A cet effet, l'invention concerne un circuit de mesure comprenant un bloc de contrôle pour contrôler ledit circuit, une base de temps pour fournir un signal d'horloge pour cadencer ledit circuit, un bloc capteur agencé pour fournir signal de sortie, ledit circuit de mesure comprenant en outre un premier bloc compteur cadencé à la fréquence d'horloge et un second bloc compteur cadencé par la fréquence du signal de sortie du bloc capteur, **caractérisé en ce que** le bloc capteur est agencé pour fournir comme signal de sortie, un premier signal dont la fréquence est représentative de la grandeur physique mesurée ou un second signal dont la fréquence est une fréquence de référence et en ce que le bloc de contrôle commande le circuit de mesure de sorte que les premiers et seconds blocs compteurs fonctionnent selon une première phase dans laquelle les premiers et seconds blocs compteurs comptent et une seconde phase dans laquelle le premier bloc compteur compte et le second bloc compteur décompte et en ce que la fréquence de cadencement du second bloc compteur lors de la première phase est différente de celle lors de la seconde phase.
Dans un premier mode de réalisation avantageux, le second bloc compteur est cadencé par la fréquence du second signal lors de la première phase et par la fréquence du premier signal lors de la seconde phase.
Dans un second mode de réalisation avantageux, le bloc de contrôle comprend un circuit de contrôle et un bloc séquenceur.
Dans un troisième mode de réalisation avantageux, le second bloc compteur comprend un détecteur de zéro connecté au bloc séquenceur.
Dans un autre mode de réalisation avantageux, le bloc capteur comprend un oscillateur, un premier composant électronique à valeur variable et un second composant électronique à valeur fixe, le premier et le second composant électronique étant connectés en parallèle à l'oscillateur par l'intermédiaire de moyens de commutation et en ce que le premier composant électronique permet de fournir le premier signal et en ce que le second composant électronique permet de fournir le second signal.

Dans un autre mode de réalisation avantageux, le premier composant et le second composant comprennent chacun une premier borne et une seconde borne et en ce que les moyens de commutation comprennent un premier et un second interrupteur commandable connectés en série entre la première borne du premier composant et la première borne du second composant et un troisième et un quatrième interrupteur commandable connectés en série entre la seconde borne du premier composant et la seconde borne du second composant, le point de connexion entre le premier et le second interrupteur commandable et le point de connexion entre le troisième et le quatrième interrupteur commandable étant connectés à l'unité oscillateur.

Dans un autre mode de réalisation avantageux, le premier composant et le second composant sont des condensateurs.

Dans un autre mode de réalisation avantageux, le premier composant et le second composant sont des résistances.

Dans un autre mode de réalisation avantageux, le premier composant et le second composant sont des bobines à inductances.

Dans un autre mode de réalisation avantageux, le bloc capteur est apte à mesurer le taux d'humidité.

Dans un autre mode de réalisation avantageux, il comprend en outre un circuit de linéarisation.

L'invention concerne également un procédé de gestion d'un circuit de mesure comprenant un bloc de contrôle pour contrôler ledit circuit, un résonateur pour fournir un signal d'horloge pour cadencer ledit circuit, un bloc capteur agencé pour fournir signal de sortie, ledit circuit de mesure comprenant en outre un premier bloc compteur cadencé à la fréquence d'horloge et un second bloc compteur cadencé par la fréquence du signal de sortie du bloc capteur, **caractérisé en ce que** le bloc capteur est agencé pour fournir comme signal de sortie, un premier signal dont la fréquence est représentative de la grandeur physique mesurée ou un second signal dont la fréquence est une fréquence de référence et ce que ledit procédé comprend les étapes suivantes :

1) sélectionner le second signal dont la fréquence est une fréquence de référence comme signal de sortie du bloc capteur

2) démarrer le comptage du premier bloc compteur cadencé par le signal d'horloge et du second bloc compteur cadencé par le signal de sortie du bloc capteur ;

3) lorsque le premier bloc compteur atteint un premier nombre prédéfini, il se remet à zéro et le second bloc compteur s'arrête de compter

4) sélectionner le premier signal dont la fréquence est représentative de la grandeur physique mesurée comme signal de sortie du bloc capteur ;

5) démarrer le comptage du premier bloc compteur cadencé par le signal d'horloge et le décomptage du second bloc compteur à partir de la valeur comptée lors l'étape 3), ledit second bloc compteur étant cadencé par le signal de sortie du bloc capteur ;

6) lorsque le second bloc compteur atteint un second nombre prédéfini :

- arrêter le comptage du premier bloc compteur et le décomptage du second bloc compteur et

- sauvegarder la valeur comptée par le premier bloc compteur ;

7) déterminer, à partir de la valeur comptée par le premier bloc compteur, la valeur de la grandeur physique mesurée par le bloc capteur.

Dans un autre mode de réalisation avantageux, le second nombre prédéfini est zéro.

Dans un autre mode de réalisation avantageux, le premier nombre prédéfini est dépendant de la résolution du compteur.

Dans un autre mode de réalisation avantageux, il comprend en outre une étape finale visant à linéariser la valeur comptée par le premier bloc compteur en fonction de la grandeur physique mesurée, cette étape consistant à mettre au carré ladite valeur comptée par le premier bloc compteur.

**EP 2 757 352 B1**

L'invention concerne en outre un objet portable électronique comprenant le circuit de mesure selon l'invention.

BREVE DESCRIPTION DES FIGURES

Les buts, avantages et caractéristiques du circuit de mesure selon la présente invention apparaîtront plus clairement dans la description détaillée suivante d'au moins une forme de réalisation de l'invention donnée uniquement à titre d'exemple non limitatif et illustrée par les dessins annexés sur lesquels :

- les figures 1 et 2 représentent de manière schématique exemple de circuit de mesure selon la présente invention ;
- la figure 3 représente un diagramme de fonctionnement du procédé selon l'invention ; et
- la figure 4 représente de façon schématique l'unité oscillateur selon l'invention.

DESCRIPTION DETAILLEE

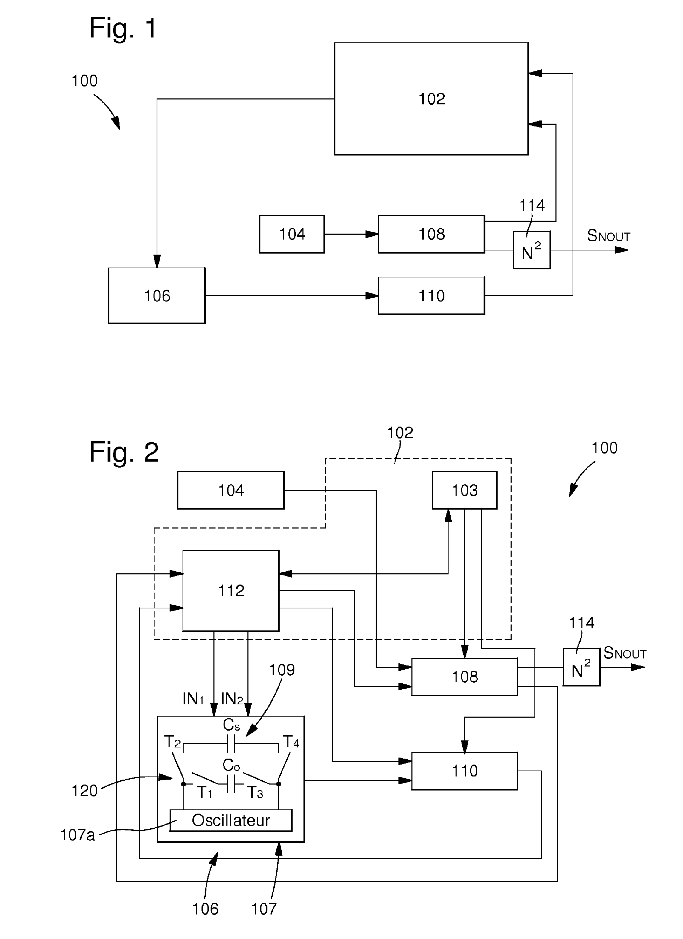

Les figures 1 et 2 représentent le circuit de mesure 100 selon l'invention. Ce circuit de mesure 100 peut être intégré dans un objet portable tel qu'une montre ou un appareil de téléphonie ou de communication ou un appareil de mesure portatif. Ce circuit de mesure 100 comprend un bloc de contrôle 102 comprenant un circuit de commande 103 utilisé pour commander le circuit de mesure 100. Le circuit de mesure 100 est cadencé par une base de temps 104 qui peut être par exemple un oscillateur RC ou un oscillateur à quartz et qui fournit un signal Fclk.

Ce circuit de mesure 100 comprend en outre un bloc capteur 106 pour fournir une indication d'une grandeur physique. Dans le cas présent, le bloc capteur 106 est utilisé pour mesurer le taux d'humidité. Le bloc capteur 106 comprend un capteur d'humidité ou unité de mesure de l'humidité 109. Ce capteur d'humidité 109 se présente sous la forme d'un micro-mécanisme de type MEMS composé de deux armatures alimentées électriquement. Lorsque l'humidité augmente, des molécules d'eau s'infiltrent entre les armatures de sorte que la capacité entre celles-ci varie. Le capteur d'humidité 109 sera représenté par un condensateur variable Cs comprenant une premier borne de contact et une seconde borne de contact.

Avantageusement selon l'invention, le bloc capteur 106 comprend en plus du capteur 109, une unité oscillateur 107 comprenant un condensateur de référence $C_0$ et un oscillateur RC 107a. Le condensateur de référence $C_0$ comprend une première borne de contact et une seconde borne de contact. La première borne de contact du condensateur $C_0$ est reliée à la première borne de contact du capteur d'humidité via des moyens de commutation 120 comme un premier T1 et un second T2 interrupteur commandable. La seconde borne de contact du condensateur $C_0$ est reliée à la seconde borne de contact du capteur d'humidité via des moyens de commutation comme un troisième T3 et un quatrième T4 interrupteur commandable. Les interrupteurs commandables peuvent être des transistors. Cette configuration permet de connecter le condensateur de référence $C_0$ ou le condensateur variable $C_s$ faisant office de capteur d'humidité à l'oscillateur RC 107a. Cet oscillateur RC 107a fonctionne sur le principe d'un circuit RC mis en oscillation, la fréquence étant dépendante de la valeur de la résistance R et de la valeur de capacité du condensateur C de sorte que la fréquence d'un oscillateur RC vaut : $f = \frac{1}{4\pi} \sqrt{\frac{gm}{R.Cs*CL}}$ avec gm qui est la transconductance des transistors MOS N3 et N4 et $C_L$ une capacité de charge interne.

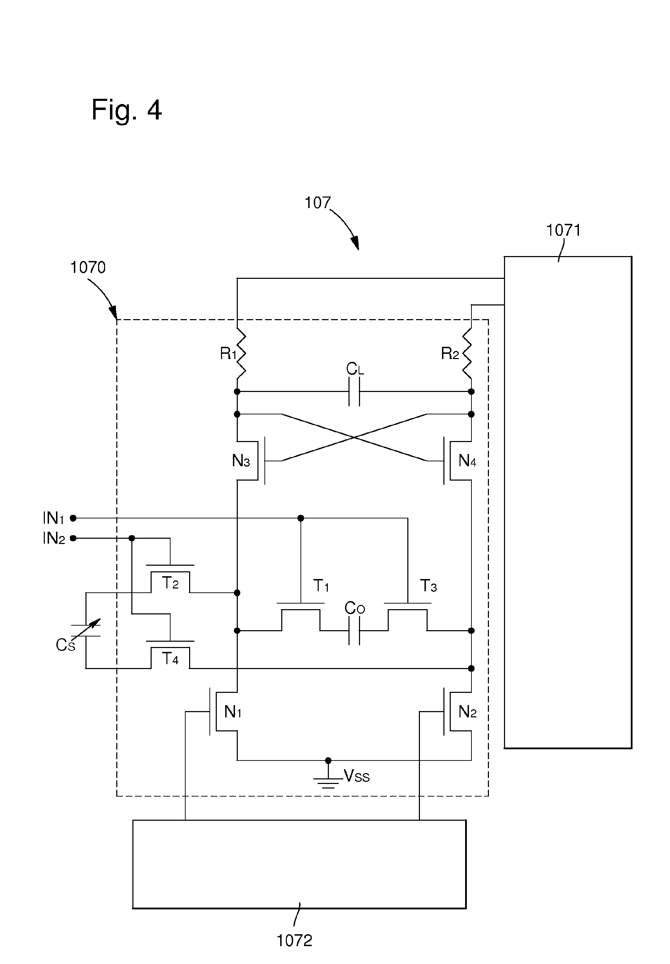

Dans le cas de la présente invention, l'unité oscillateur RC 107 comprend trois éléments c'est-à-dire un oscillateur à relaxation 1070 connecté à un bloc de polarisation 1072 et à un bloc extracteur d'horloge 1071 comme visible à la figure 4. L'oscillateur à relaxation comprend deux paires de transistors, une première paire de transistors N1 et N2 ayant chacun leur source connectée à la masse du circuit et le drain connecté à la source d'un transistor. Le drain du transistor N1 est connecté à la source du transistor N3 et le drain du transistor N2 est connecté à la source du transistor N4. Les drains des transistors N3 et N4 sont connectés chacun à une borne d'une résistance ayant son autre borne connectée à une tension d'alimentation via le module extracteur. Les grilles des transistors N1 et N2 sont connectées au bloc de polarisation alors que la grille du transistor N3 est connectée au drain du transistor N4, la grille du transistor N4 étant connectée au drain du transistor N3.

L'oscillateur à relaxation comprend également quatre transistors (T1, T2,T3 et T4) de commutation qui sont les moyens de commutation 120. Les transistors T1 et T3 sont agencés de sorte que le drain de T1 est connecté au drain de N1 et que la source de T3 est connectée au drain de N2, la capacité $C_0$ étant connectée entre la source de T1 et le drain de T3. Les transistors T2 et T4 sont connectés de sorte que la source de T2 soit connectée au drain de N1 et que la source de T4 est connectée au drain de N2. Les grilles de T1 et T3 sont reliées à une première borne IN1 et les grilles de T2 et T4 sont reliées à une seconde borne IN2 de sorte à pouvoir être commutées. La structure du capteur, c'est-à-dire la capacité variable Cs est connectée entre les drains de T2 et T4. Il est constaté que l'oscillateur à relaxation

4

présente une capacité interne $C_L$ entre la borne de la résistance R1 relié au transistor N3 et la borne de la résistance R2 relié au transistor N4. On obtient une fréquence : $f = \dfrac{1}{4\pi} \sqrt{\dfrac{gm}{R.Cs * CL}}$

De ce fait, la fréquence fournie en sortie du bloc capteur 106 sera dépendante de la capacité du condensateur variable $C_s$ pour donner un premier signal de fréquence $F_s$ représentatif de la grandeur physique mesurée ou du condensateur de référence $C_0$ pour donner un second signal de fréquence $F_{ref}$ qui est un signal de référence.

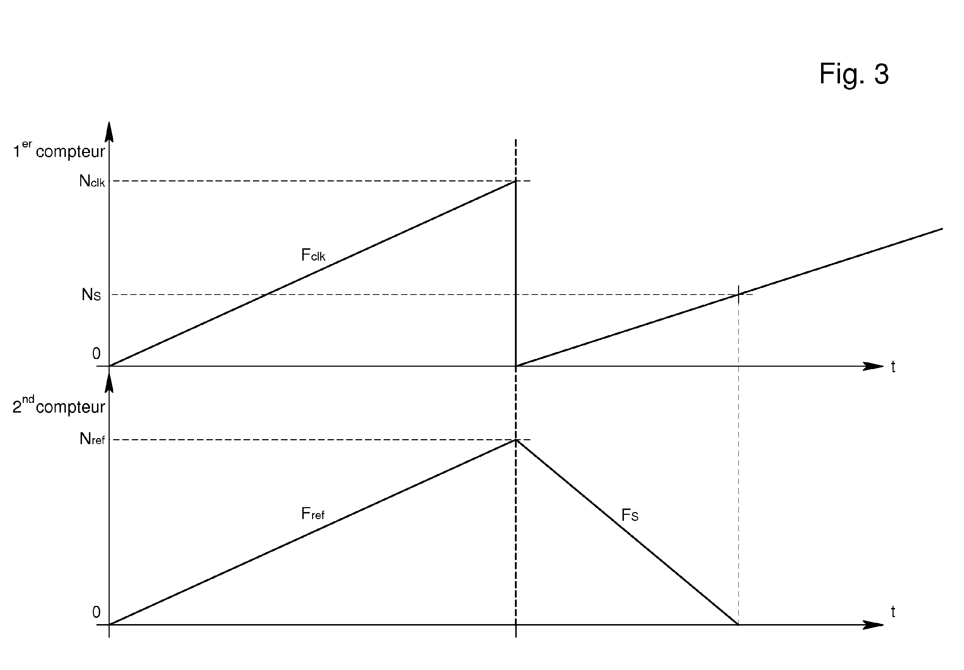

Par ailleurs, le circuit de mesure 100 comprend un premier bloc compteur 108 connecté à la base de temps 104 et un second bloc compteur 110 connecté à la sortie du bloc capteur 106. Le premier bloc compteur 108 et le second bloc compteur 110 sont synchrones c'est-à-dire qu'ils sont commandés simultanément. Pour commander le premier 108 et le second 110 bloc compteur, le circuit de commande 103 est utilisé. Le bloc de contrôle 102 comprend une unité de synchronisation des compteurs. Le bloc de contrôle 102 comprend en outre un bloc séquenceur 112. Ce bloc séquenceur 112 est utilisé pour agir à la fois sur les premiers 108 et seconds 110 blocs compteurs mais aussi sur le bloc capteur 106. Cette configuration permet d'utiliser une méthode de calcul de la grandeur physique selon l'invention. Cette méthode est appelée méthode double rampe. Cette méthode se déroule en deux phases dont un diagramme est visible à la figure 3.

Dans une première phase, le circuit de commande 103 et le bloc séquenceur 112 commande le circuit de mesure 100. Le bloc séquenceur 112 commande le bloc capteur de sorte que la fréquence de sortie du bloc capteur 106 est la fréquence de référence $F_{ref}$ c'est-à-dire que le bloc séquenceur 112 fait en sorte que les seconds T2 et quatrièmes T4 interrupteurs soient ouverts alors que les premiers T1 et troisièmes T3 interrupteurs sont fermés.

De plus, le circuit de commande 103 et le bloc séquenceur 112 commande le circuit de mesure 100 de sorte que le premier bloc compteur 108 et le second bloc compteur 110 se mettent à compter. Le premier bloc compteur 108 compte en étant cadencé par la fréquence de la base de temps $F_{clk}$ alors que le second bloc compteur 110 compte en étant cadencé par la fréquence de sortie du bloc capteur soit la fréquence de référence $F_{ref}$. Le premier bloc compteur 108 est configuré pour compter jusqu'à un premier nombre prédéfini $N_{clk}$. Le second bloc compteur 110 est synchrone au premier bloc compteur c'est-à-dire que le premier bloc compteur 108 et le second bloc compteur 110 se mettent à compter ou démarrent simultanément. Lorsque le premier compteur arrive au nombre prédéfini $N_{clk}$, il s'arrête de compter et le second bloc compteur 110 s'arrête également de compter.

Une fois que le premier bloc compteur 108 est arrivé au nombre prédéfini $N_{clk}$ et qu'il passe à zéro, la second phase peut débuter. Ce passage à zéro est détecté par le circuit de commande 103. Ce circuit de commande 103 et le bloc séquenceur 112 agissent sur le second bloc compteur 110 de sorte que celui-ci passe d'un mode comptage à un mode décomptage.

Cette phase consiste premièrement à permuter la fréquence de sortie du bloc capteur 106. Le bloc séquenceur 112 agit de que les seconds T2 et quatrièmes T4 interrupteurs soient fermés alors que les premiers T1 et troisièmes T3 interrupteurs sont ouverts.

La fréquence de sortie est alors dépendante de la grandeur physique mesurée par le capteur.

Puis, dans cette seconde phase, le premier bloc compteur 108 recommence à compter tandis que le second bloc compteur 110 se met à décompter. Le second bloc compteur 110 se met à décompter à partir du nombre $N_{ref}$ sauvegardé. Le décompte se fait alors en étant cadencé par la fréquence de sortie du bloc capteur 106 c'est-à-dire la fréquence représentative de la grandeur physique mesurée $F_s$. Chaque bloc compteur est muni d'un détecteur de zéro de sorte que lorsque le second bloc compteur 110 arrive à un second nombre prédéfini qui est zéro, le premier compteur 108 s'arrête de compter également. Le nombre $N_s$ compté par ledit premier compteur 108 est alors sauvegardé.

Les différentes valeurs de $N_{ref}$, $N_{clk}$ et les valeurs des différentes fréquences permettent de calculer la valeur de la grandeur physique. Ces valeurs sont transmises au circuit de commande 103 ou à un circuit de calcul non représenté sur les figures qui se charge de fournir la valeur de la grandeur physique mesurée.

En effet, de la première phase, on admet que

$$N_{clk} \times \frac{1}{Fclk} = N_{ref} \times \frac{1}{Fref}$$

De ce fait :

$$N_{clk} \times \frac{Fref}{Fclk} = N_{ref} \text{ (équation 1)}$$

Ensuite, de la seconde phase, on admet que

$$N_s \times \frac{1}{Fclk} = N_{ref} \times \frac{1}{Fs} \text{ (equation 2)}$$

En combinant les équations 1 et 2, on obtient alors :

$$N_s = N_{ref} \times \frac{Fclk}{Fs} = N_{clk} \times \frac{Fref}{Fclk} \times \frac{Fclk}{Fs} = N_{clk} \times \frac{Fref}{Fs} \text{ (équation 4)}$$

En connaissant les formules des fréquences des oscillateurs RC pour les fréquences $F_{ref}$ et $F_s$, on peut introduire ces formules dans l'équations 4 ce qui donne : $N_s = N_{clk} \times \sqrt{\frac{Cs}{C0}}$

On obtient donc un nombre $N_s$ qui est indépendant de la fréquence de la base de temps. Cela entraîne l'avantage d'avoir un circuit dont la fréquence de la base de temps 104 n'a alors pas besoin d'être précise car elle n'influe pas sur la valeur mesurée.

Pour linéariser la relation entre la capacité mesurée par le capteur et le nombre $N_s$ donné par le compteur 108, le nombre $N_s$ est mis au carré par un circuit de linéarisation 114 pour obtenir le nombre $N_{sl}$ ce qui donne :

$N_{sl} = N_s^2 = N_{clk}^2 \times \frac{Cs}{C0}$. Ce circuit de linéarisation 114 fournit en sortie $S_{NOUT}$. le nombre $N_{sl}$ prêt à être utilisé par un processeur par exemple.

Or, le nombre $N_{clk}$ est dépendant de la résolution du circuit. En effet, les données fournies par les blocs compteurs 108, 110 sont transmises sur un nombre de bit donné sachant que plus le nombre de bit est élevé et plus la précision est importante. Ce qui signifie que le nombre $N_{clk}$ est égal à $2^{résolution}$ avec la résolution qui est égale au nombre de bit utilisé.

Par conséquent,

$$N_{sl} = N_{clk}^2 \times \frac{Cs}{C0} = 2^{2 \times résolution} \times \frac{Cs}{C0}$$

On constate donc que le nombre $N_{sl}$ permettant d'obtenir la valeur de la grandeur physique mesurée est indépendant de la fréquence du circuit de mesure 100 mais aussi indépendant de la résistance R de l'oscillateur RC 107a du bloc capteur 106 ou de la transconductance $g_m$ des transistors de l'oscillateur 107a et de la capacité $C_L$ interne de l'oscillateur 107a.

Or, par une étape préalable lors de la fabrication du bloc capteur 106, un étalonnage est effectué de sorte que la capacité $C_s$ pour un taux d'humidité de 0% est définie et que la capacité $C_s$ pour un taux d'humidité de 100% est définie. De ce fait, il est défini que le nombre $N_{clk}$ au carré correspond au taux d'humidité maximum et par un rapide calcul, on peut déterminer le taux d'humidité en fonction du nombre $N_{sl}$ mesuré.

Il est envisageable que cette méthode soit utilisé au coup par coup. On entend par là que les premieres et deuxièmes phases peuvent être effectués à intervalle régulier afin que d'avoir une mesure de la grandeur physique à intervalle régulier. Cette fréquence de mesure peut être définie ou paramétrée. De même, il est possible que cette mesure de la grandeur physique en utilisant la méthode et le circuit selon l'invention soit faite sur demande. On comprend que l'utilisateur actionne une commande lorsqu'il veut connaitre la valeur de la grandeur physique.

Dans une variante, le circuit de mesure 100 ne sera pas limité à un bloc capteur 106 pour mesurer le taux d'humidité et sera étendue à d'autres grandeurs physiques mesurables avec un capteur capacitif.

Dans une alternative, le bloc capteur 106 ne sera pas capacitif mais inductif. De ce fait, le capteur comprendra une structure faisant office d'inductance variable qui sera relié à un oscillateur du type LC par exemple. De même, un capteur utilisant une résistance variable pourrait être utilisé, ladite résistance variable étant connecté à un oscillateur RC.

## Revendications

1. Circuit de mesure (100) comprenant un bloc de contrôle (102) pour contrôler ledit circuit, une base de temps (104) pour fournir un signal d'horloge ($f_{clk}$) pour cadencer ledit circuit, un bloc capteur (106) agencé pour fournir signal de sortie, ledit circuit de mesure comprenant en outre un premier bloc compteur (108) cadencé à la fréquence d'horloge et un second bloc compteur (110) cadencé par la fréquence du signal de sortie du bloc capteur, **caractérisé en ce que** le bloc capteur est agencé pour fournir comme signal de sortie, un premier signal dont la fréquence est représentative de la grandeur physique mesurée ($F_s$) ou un second signal dont la fréquence est une fréquence de référence ($F_{ref}$) et **en ce que** le bloc de contrôle commande le circuit de mesure de sorte que les premiers et seconds blocs compteurs fonctionnent selon une première phase dans laquelle les premiers et seconds blocs compteurs comptent et une seconde phase dans laquelle le premier bloc compteur compte et le second bloc compteur décompte et **en ce que** la fréquence de cadencement du second bloc compteur lors de la première phase est différente de celle lors de la seconde phase.

2. Circuit de mesure selon la revendication 1, **caractérisé en ce que** le second bloc compteur (110) est cadencé par la fréquence ($F_{ref}$) du second signal lors de la première phase et par la fréquence ($F_s$) du premier signal lors de la seconde phase.

3. Circuit de mesure selon les revendications 1 ou 2, **caractérisé en ce que** le bloc de contrôle (102) comprend un circuit de contrôle (103) et un bloc séquenceur (112).

4. Circuit de mesure selon la revendication 3, **caractérisé en ce que** le second bloc compteur (110) comprend un détecteur de zéro connecté au bloc séquenceur (112).

5. Circuit de mesure selon l'une des revendications précédentes, **caractérisé en ce que** le bloc capteur (106) comprend un oscillateur (107a), un premier composant électronique à valeur variable ($C_s$) et un second composant électronique à valeur fixe ($C_0$), le premier et le second composant électronique étant connectés en parallèle à l'oscillateur (107a) par l'intermédiaire de moyens de commutation (120) et **en ce que** le premier composant électronique permet de fournir le premier signal et **en ce que** le second composant électronique permet de fournir le second signal.

6. Circuit de mesure selon la revendication 5, **caractérisé en ce que** le premier composant ($C_s$) et le second composant ($C_0$) comprennent chacun une premier borne et une seconde borne et **en ce que** les moyens de commutation comprennent un premier (T1) et un second (T2) interrupteur commandable connectés en série entre la première borne du premier composant et la première borne du second composant, et un troisième (T3) et un quatrième (T4) interrupteur commandable connectés en série entre la seconde borne du premier composant et la seconde borne du second composant, le point de connexion entre le premier et le second interrupteur commandable et le point de connexion entre le troisième et le quatrième interrupteur commandable étant connectés à l'unité oscillateur.

7. Circuit de mesure selon les revendications 5 ou 6, **caractérisé en ce que** le premier composant et le second composant sont des condensateurs.

8. Circuit de mesure selon les revendications 5 ou 6, **caractérisé en ce que** le premier composant et le second composant sont des résistances.

9. Circuit de mesure selon les revendications 5 ou 6, **caractérisé en ce que** le premier composant et le second composant sont des bobines à inductances.

10. Circuit de mesure selon l'une des revendications précédentes, **caractérisé en ce que** le bloc capteur (106) est apte à mesurer le taux d'humidité.

11. Circuit de mesure selon l'une des revendications précédentes, **caractérisé en ce qu'il** comprend en outre un circuit de linéarisation (114).

12. Procédé de gestion d'un circuit de mesure (100) comprenant un bloc de contrôle (102) pour contrôler ledit circuit, une base de temps (104) pour fournir un signal d'horloge pour cadencer ledit circuit, un bloc capteur (106) agencé pour fournir signal de sortie, ledit circuit de mesure comprenant en outre un premier bloc compteur (108) cadencé à la fréquence d'horloge et un second bloc compteur (110) cadencé par la fréquence du signal de sortie du bloc capteur, **caractérisé en ce que** le bloc capteur est agencé pour fournir comme signal de sortie, un premier signal dont la fréquence ($F_s$) est représentative de la grandeur physique mesurée ou un second signal dont la fréquence ($F_{ref}$) est une fréquence de référence et ce que ledit procédé comprend les étapes suivantes :

   1) sélectionner le second signal dont la fréquence est une fréquence de référence comme signal de sortie du bloc capteur
   2) démarrer le comptage du premier bloc compteur cadencé par le signal d'horloge et du second bloc compteur cadencé par le signal de sortie du bloc capteur ;
   3) lorsque le premier bloc compteur atteint un premier nombre prédéfini ($N_{clk}$), il se remet à zéro et le second bloc compteur s'arrête de compter;

4) sélectionner le premier signal dont la fréquence est représentative de la grandeur physique mesurée comme signal de sortie du bloc capteur ;

5) démarrer le comptage du premier bloc compteur cadencé par le signal d'horloge et le décomptage du second bloc compteur à partir de la valeur comptée ($N_{ref}$) lors l'étape 3), ledit second bloc compteur étant cadencé par le signal de sortie du bloc capteur ;

6) lorsque le second bloc compteur atteint un second nombre prédéfini :

- arrêter le comptage du premier bloc compteur et le décomptage du second bloc compteur et
- sauvegarder la valeur comptée par le premier bloc compteur ($N_s$);

7) déterminer, à partir de la valeur comptée ($N_s$) par le premier bloc compteur, la valeur de la grandeur physique mesurée par le bloc capteur.

**13.** Procédé de gestion selon la revendication 12, **caractérisé en ce que** le second nombre prédéfini ($N_s$) est zéro.

**14.** Procédé de gestion selon la revendication 12, **caractérisé en ce que** le premier nombre prédéfini ($N_{clk}$) est dépendant de la résolution du compteur.

**15.** Procédé de gestion selon la revendication 12, **caractérisé en ce qu'il** comprend en outre une étape finale visant à linéariser la valeur comptée par le premier bloc compteur en fonction de la grandeur physique mesurée, cette étape consistant à mettre au carré ladite valeur comptée par le premier bloc compteur.

**16.** Objet portable électronique **caractérisé en ce qu'il** comprend le circuit de mesure (100) selon l'une des revendication 1 à 11.

## Patentansprüche

**1.** Messschaltung (100), die einen Steuerblock (102) zum Steuern der Schaltung, eine Zeitbasis (104) zum Liefern eines Taktsignals ($f_{clk}$), um die Schaltung zu takten, und einen Sensorblock (106), der dafür ausgelegt ist, ein Ausgangssignal zu liefern, umfasst, wobei die Messschaltung außerdem einen ersten Zählerblock (108), der mit der Taktfrequenz getaktet wird, und einen zweiten Zählerblock (110), der mit der Frequenz des Ausgangssignals des Sensorblocks getaktet wird, umfasst, **dadurch gekennzeichnet, dass** der Sensorblock dafür ausgelegt ist, als Ausgangssignal ein erstes Signal, dessen Frequenz die gemessene physikalische Größe ($F_s$) darstellt, oder ein zweites Signal, dessen Frequenz eine Referenzfrequenz ($F_{ref}$) ist, zu liefern, und dass der Steuerblock die Messschaltung in der Weise steuert, dass der erste und der zweite Zählerblock gemäß einer ersten Phase arbeiten, in der der erste und der zweite Zählerblock zählen, und gemäß einer zweiten Phase arbeiten, in der der erste Zählerblock zählt und der zweite Zählerblock abwärts zählt, und dass die Taktfrequenz des zweiten Zählerblocks in der ersten Phase von jener in der zweiten Phase verschieden ist.

**2.** Messschaltung nach Anspruch 1, **dadurch gekennzeichnet, dass** der zweite Zählerblock (110) in der ersten Phase mit der Frequenz ($F_{ref}$) des zweiten Signals getaktet wird und in der zweiten Phase mit der Frequenz ($F_s$) des ersten Signals getaktet wird.

**3.** Messschaltung nach den Ansprüchen 1 oder 2, **dadurch gekennzeichnet, dass** der Steuerblock (102) eine Steuerschaltung (103) und einen Ablauf-steuerungsblock (112) umfasst.

**4.** Messschaltung nach Anspruch 3, **dadurch gekennzeichnet, dass** der zweite Zählerblock (110) einen mit dem Ablaufsteuerungsblock (112) verbundenen Null-Detektor umfasst.

**5.** Messschaltung nach einem der vorhergehenden Ansprüche, **dadurch gekennzeichnet, dass** der Zählerblock (106) einen Oszillator (107a), eine erste elektronische Komponente mit variablem Wert ($C_s$) und eine zweite elektronische Komponente mit festem Wert ($C_0$) umfasst, wobei die erste und die zweite elektronische Komponente zu dem Oszillator (107a) über Kommutationsmittel (120) parallel geschaltet sind, und dass die erste elektronische Komponente ermöglicht, das erste Signal zu liefern, und dass die zweite elektronische Komponente ermöglicht, das zweite Signal zu liefern.

**6.** Messschaltung nach Anspruch 5, **dadurch gekennzeichnet, dass** die erste Komponente ($C_s$) und die zweite Komponente ($C_0$) jeweils einen ersten Anschluss und einen zweiten Anschluss aufweisen und dass die Kommutationsmittel einen ersten (T1) und einen zweiten (T2) steuerbaren Ein/Aus-Schalter, die zwischen dem ersten Anschluss der ersten Komponente und dem ersten Anschluss der zweiten Komponente in Reihe geschaltet sind, und einen dritten (T3) und einen vierten (T4) steuerbaren Ein/Aus-Schalter, der zwischen dem zweiten Anschluss der ersten Komponente und dem zweiten Anschluss der zweiten Komponente in Reihe geschaltet sind, umfassen, wobei der Verbindungspunkt zwischen dem ersten und dem zweiten steuerbaren Ein/Aus-Schalter und der Verbindungspunkt zwischen dem dritten und dem vierten steuerbaren Ein/Aus-Schalter mit der Oszillatoreinheit verbunden sind.

**7.** Messschaltung nach den Ansprüchen 5 oder 6, **dadurch gekennzeichnet, dass** die erste Komponente und die zweite Komponente Kondensatoren sind.

**8.** Messschaltung nach den Ansprüchen 5 oder 6, **dadurch gekennzeichnet, dass** die erste Komponente und die zweite Komponente Widerstände sind.

**9.** Messschaltung nach den Ansprüchen 5 oder 6, **dadurch gekennzeichnet, dass** die erste Komponente und die zweite Komponente Spulen mit Induktivitäten sind.

**10.** Messschaltung nach einem der vorhergehenden Ansprüche, **dadurch gekennzeichnet, dass** der Zählerblock (106) den Feuchtigkeitsgehalt messen kann.

**11.** Messschaltung nach einem der vorhergehenden Ansprüche, **dadurch gekennzeichnet, dass** sie außerdem eine Linearisierungsschaltung (114) umfasst.

**12.** Verfahren zum Steuern einer Messschaltung (100), die einen Steuerblock (102) zum Steuern der Schaltung, eine Zeitbasis (104) zum Liefern eines Taktsignals, um die Schaltung zu takten, und einen Sensorblock (106), der dafür ausgelegt ist, ein Ausgangssignal zu liefern, umfasst, wobei die Mess-schaltung außerdem einen ersten Zählerblock (108), der mit der Taktfrequenz getaktet wird, und einen zweiten Zählerblock (110), der mit der Frequenz des Ausgangssignals des Sensorblocks getaktet wird, umfasst, **dadurch gekennzeichnet, dass** der Sensorblock dafür ausgelegt ist, als Ausgangssignal ein erstes Signal, dessen Frequenz ($F_s$) die gemessene physikalische Größe darstellt, oder ein zweites Signal, dessen Frequenz ($F_{ref}$) eine Referenzfrequenz ist, zu liefern, und dass das Verfahren die folgenden Schritte umfasst:

1) Auswählen des zweiten Signals, dessen Frequenz eine Referenz-frequenz ist, als Ausgangssignal des Sensorblocks,
2) Starten des Zählens des ersten Zählerblocks, der mit dem Taktsignal getaktet wird, und des zweiten Zählerblocks, der mit dem Ausgangssignal des Zählerblocks getaktet wird;
3) wenn der erste Zählerblock eine erste im Voraus definierte Zahl ($N_{clk}$) erreicht, Zurücksetzen des ersten Zählerblocks auf null und Anhalten des Zählens des zweiten Zählerblocks;
4) Auswählen des ersten Signals, dessen Frequenz die gemessene physikalische Größe darstellt, als Ausgangssignal des Sensorblocks;
5) Starten des Zählens des ersten Zählerblocks, der mit dem Taktsignal getaktet wird, und des Abwärtszählens des zweiten Zählerblocks ausgehend von dem im Schritt 3) gezählten Wert ($N_{ref}$), wobei der zweite Zählerblock mit dem Ausgangssignal des Sensorblocks getaktet wird;
6) wenn der zweite Zählerblock eine zweite im Voraus definierte Zahl erreicht:

- Beenden des Zählens des ersten Zählerblocks und des Abwärts-zählens des zweiten Zählerblocks und
- Sichern des durch den ersten Zählerblock gezählten Wertes ($N_s$);

7) Bestimmen anhand des durch den ersten Zählerblock gezählten Wertes ($N_s$) des Wertes der durch den Sensorblock gemessenen physikalischen Größe.

**13.** Steuerverfahren nach Anspruch 12, **dadurch gekennzeichnet, dass** die zweite im Voraus definierte Zahl ($N_s$) gleich null ist.

**14.** Steuerverfahren nach Anspruch 12, **dadurch gekennzeichnet, dass** die erste im Voraus definierte Zahl ($N_{clk}$) von der Auflösung des Zählers abhängt.

15. Steuerverfahren nach Anspruch 12, **dadurch gekennzeichnet, dass** es außerdem einen letzten Schritt umfasst, der darauf zielt, den von dem ersten Zählerblock gezählten Wert als Funktion der gemessenen physikalischen Größe zu linearisieren, wobei dieser Schritt darin besteht, den mit dem ersten Zählerblock gezählten Wert zum Quadrat zu erheben.

16. Tragbarer elektronischer Gegenstand, **dadurch gekennzeichnet, dass** er die Messschaltung (100) nach einem der Ansprüche 1 bis 11 enthält.

**Claims**

1. Measuring circuit (100) comprising a control block (102) for controlling said circuit, a time base (104) for providing a clock signal ($f_{clk}$) in order to time said circuit, a sensor block (106) which is designed to provide an output signal, said measuring circuit comprising in addition a first counting block (108) which is timed to the clock frequency and a second counting block (110) which is timed by the frequency of the output signal of the sensor block, **characterised in that** the sensor block is designed to provide, as output signal, a first signal, the frequency of which is representative of the measured physical quantity ($F_s$) or a second signal, the frequency of which is a reference frequency ($F_{ref}$) and **in that** the control block controls the measuring circuit so that the first and second counting blocks function according to a first phase in which the first and second counting blocks count and a second phase in which the first counting block counts and the second counting block counts down and **in that** the timing frequency of the second counting block during the first phase is different from that during the second phase.

2. Measuring circuit according to claim 1, **characterised in that** the second counting block (110) is timed by the frequency ($F_{ref}$) of the second signal during the first phase and by the frequency ($F_s$) of the first signal during the second phase.

3. Measuring circuit according to claims 1 or 2, **characterised in that** the control block (102) comprises a control circuit (103) and a sequencer block (112).

4. Measuring circuit according to claim 3, **characterised in that** the second counting block (110) comprises a zero detector connected to the sequencer block (112).

5. Measuring circuit according to one of the preceding claims, **characterised in that** the sensor block (106) comprises an oscillator (107a), a first variable-value electronic component ($C_s$) and a second fixed-value electronic component ($C_0$), the first and the second electronic component being connected in parallel to the oscillator (107a) by means of commutation means (120) and **in that** the first electronic component makes it possible to provide the first signal and **in that** the second electronic component makes it possible to provide the second signal.

6. Measuring circuit according to claim 5, **characterised in that** the first component ($C_s$) and the second component ($C_0$) each comprise a first terminal and a second terminal and **in that** the commutation means comprise a first (T1) and a second (T2) controllable switch, which are connected in series between the first terminal of the first component and the first terminal of the second component, and a third (T3) and a fourth (T4) controllable switch which are connected in series between the second terminal of the first component and the second terminal of the second component, the connection point between the first and the second controllable switch and the connection point between the third and the fourth controllable switch being connected to the oscillator unit.

7. Measuring circuit according to claims 5 or 6, **characterised in that** the first component and the second component are capacitors.

8. Measuring circuit according to claims 5 or 6, **characterised in that** the first component and the second component are resistors.

9. Measuring circuit according to claims 5 or 6, **characterised in that** the first component and the second component are inductance coils.

10. Measuring circuit according to one of the preceding claims, **characterised in that** the sensor block (106) is able to measure the degree of moisture.

**11.** Measuring circuit according to one of the preceding claims, **characterised in that** it comprises in addition a linearization circuit (114).

**12.** Method for management of a measuring circuit (100) comprising a control block (102) for controlling said circuit, a time base (104) for providing a clock signal in order to time said circuit, a sensor block (106) which is designed to provide an output signal, said measuring circuit comprising in addition a first counting block (108) which is timed to the clock frequency and a second counting block (110) which is timed by the frequency of the output signal of the sensor block, **characterised in that** the sensor block is designed to provide, as output signal, a first signal, the frequency ($F_s$) of which is representative of the measured physical quantity or a second signal, the frequency ($F_{ref}$) of which is a reference frequency and **in that** said method comprises the following steps:

1) selecting the second signal, the frequency of which is a reference frequency as output signal of the sensor block;
2) starting the counting of the first counting block which is timed by the clock signal and of the second counting block which is timed by the output signal of the sensor block;
3) when the first counting block reaches a first predefined number ($N_{clk}$), it is reset at zero and the second counting block stops counting;
4) selecting the first signal, the frequency of which is representative of the measured physical quantity as output signal of the sensor block;
5) starting the counting of the first counting block which is timed by the clock signal and the counting down of the second counting block from the value ($N_{ref}$) counted during step 3), said second counting block being timed by the output signal of the sensor block;
6) when the second counting block reaches a second predefined number:

- stopping the counting of the first counting block and the counting down of the second counting block and
- saving the value ($N_s$) counted by the first counting block;

7) determining, from the value ($N_s$) counted by the first counting block, the value of the physical quantity measured by the sensor block.

**13.** Method for management according to claim 12, **characterised in that** the second predefined number ($N_s$) is zero.

**14.** Method for management according to claim 12, **characterised in that** the first predefined number ($N_{clk}$) is dependent upon the resolution of the counter.

**15.** Method for management according to claim 12, **characterised in that** it comprises in addition a final step which is intended to linearize the value counted by the first counting block as a function of the measured physical quantity, this step consisting of squaring said value counted by the first counting block.

**16.** Wearable/portable electronic object, **characterised in that** it comprises the measuring circuit (100) according to one of the claims 1 to 11.

# Fig. 1

# Fig. 2

Fig. 3

Fig. 4

EP 2 757 352 B1

**RÉFÉRENCES CITÉES DANS LA DESCRIPTION**

**Documents brevets cités dans la description**

- JP S58182502 A